# EUROPEAN PATENT APPLICATION

(11) **EP 4 451 722 A1**
(43) Date of publication of application: **23.10.2024**
(21) Application number: 24163734.7
(22) Date of filing: 15.03.2024
(51) Int. Cl.: H04W 12/122

(54) **DETECTION OF UNWANTED TRANSCEIVERS**

(30) Priority: 19.04.2023 FI 20235439
(71) Applicant: Nokia Technologies Oy, 02610 Espoo (FI)
(72) Inventor: BARBU, Oana-Elena, Aalborg (DK); VEJLGAARD, Benny, Gistrup (DK); BARACCA, Paolo, Munich (DE)
(74) Representative: Nokia EPO representatives

(57) **Abstract**

Apparatuses and methods in a communication system are disclosed. The solution comprises transmitting (300) to one or more terminal devices a request to transmit a tagimpersonating signal; transmitting (302) to one or more devices or network nodes a request to scan for tagimpersonating signals and if found obtain information, at least, of the signals and report the information, receiving (304) information from one or more devices or network nodes and determining (306), based on the received information, information indicating whether there are unwanted transceivers or signals.

## Description

### Field

The exemplary and non-limiting embodiments of the invention relate generally to wireless communication systems. Embodiments of the invention relate especially to apparatuses and methods in wireless communication networks.

### Background

Wireless telecommunication systems are under constant development. Many kinds of new services utilising connections provided by wireless telecommunication systems are studied and taken into use. For example, one area being developed and used is Internet-of-Things, IoT, where a multitude of devices are connected to Internet and communicate with each other. Ultra-low cost and low power consumption are typical features of these devices. Some of these devices are passive radios, which are capable of harnessing energy from received signals and transmitting or backscattering signals using the harnessed energy.

Security is an essential aspect in any wireless or wired communication and a challenge also in the above-mentioned environment. unwanted transceivers may try to interfere also with communications utilising passive radios and backscattering. Detection of such transceivers is needed.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided apparatus in a communication system, comprising: a processor and a memory including instructions, the instructions, when executed by the processor, cause the apparatus to: transmit to one or more devices a request to transmit a tag-impersonating signal; transmit to one or more devices or network nodes a request to scan for tag-impersonating signals and if found obtain information, at least, on spectrum where signals were found and report the information; receive information from one or more devices or network nodes; and determine, based on the received information, information indicating whether there are unwanted transceivers or signals.

According to an aspect of the present invention, there is provided an apparatus in a communication system, comprising: a processor and a memory including instructions, the instructions, when executed by the processor, cause the apparatus to: receive from a network a request to transmit a tag-impersonating signal; transmit the tag-impersonating signal.

According to an aspect of the present invention, there is provided an apparatus in a communication system, comprising: a processor and a memory including instructions, the instructions, when executed by the processor, cause the apparatus to: receive from a network element a request to scan for tag-impersonating signals; scan, based on the request, for tag-impersonating signals, and if found, report information on spectrum where signals were found to the network element.

According to an aspect of the present invention, there is provided a method in an apparatus in a communication system comprising the steps of: transmitting to one or more devices a request to transmit a tag-impersonating signal; transmitting to one or more devices or network nodes a request to scan for tag-impersonating signals and if found obtain information, at least, on spectrum where signals were found and report the information; receiving information from one or more terminal devices or network nodes; and determining, based on the received information, information indicating whether there are unwanted transceivers or signals.

According to an aspect of the present invention, there is provided a method in an apparatus in a communication system comprising the steps of: receiving from a network a request to transmit a tag-impersonating signal; transmitting the tag-impersonating signal.

According to an aspect of the present invention, there is provided a method in an apparatus in a communication system comprising the steps of: receiving from a network element a request to scan for tag-impersonating signals; scanning, based on the request, for tag-impersonating signals, and if found, report information on spectrum where signals were found the network element.

According to an aspect of the present invention, there is provided an apparatus in a communication system, comprising means for transmitting to one or more devices a request to transmit a tag-impersonating signal; means for transmitting to one or more devices or network nodes a request to scan for tag-impersonating signals and if found obtain information, at least, on spectrum where signals were found and report the information; means for receiving information from one or more devices or network nodes; and means for determining, based on the received information, information indicating whether there are unwanted transceivers or signals.

According to an aspect of the present invention, there is provided an apparatus in a communication system, comprising means for receiving from a network a request to transmit a tag-impersonating signal and means for transmitting the tag-impersonating signal.

According to an aspect of the present invention, there is provided an apparatus in a communication system, comprising means for receiving from a network element a request to scan for tag-impersonating signals; means for scanning, based on the request, for tag-impersonating signals, and if found, report information on spectrum where signals were found the network element.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figures 1 and 2 illustrate examples of simplified system architecture of a communication system;
Figures 3A, 3B and 3C are flowcharts illustrating some embodiments;
Figures 4 and 5 are signalling charts illustrates some embodiments and

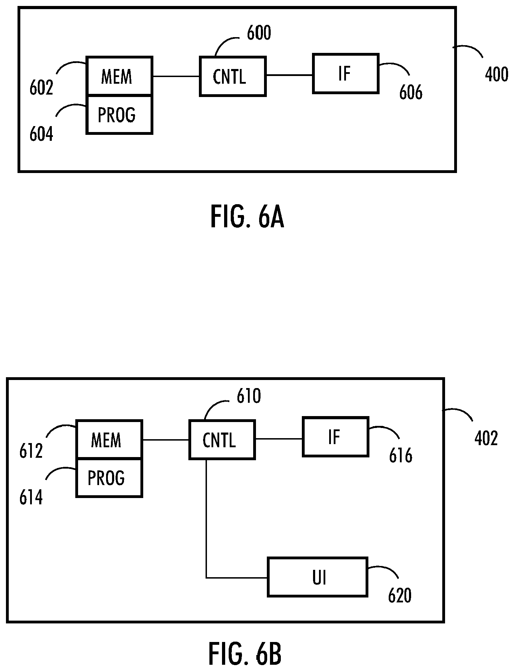

Figures 6A and 6B illustrate simplified examples of apparatuses applying some embodiments of the invention.

### Description of some embodiments

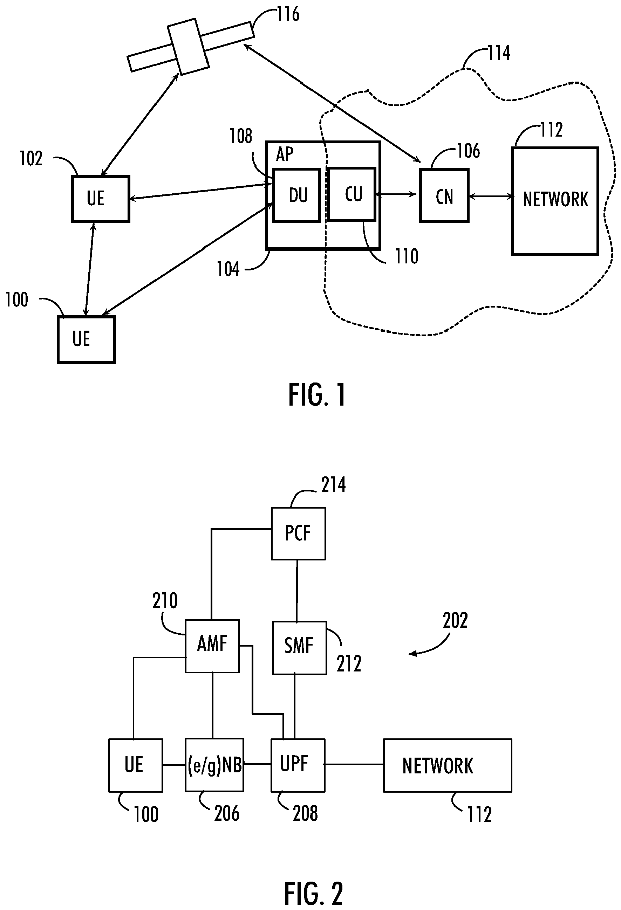

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

IoT-environment which relies on ultra-low complexity devices with ultra-low power consumption for the very-low end IoT applications is planned to be used also in connection with 5G or NR. Suitable devices may be for example pure batteryless devices with no energy storage capability at all, and completely dependent on the availability of the ambient source of energy and devices with some energy storage capability (e.g. up to that available from ambient sources via energy harvesting) that do not need to be replaced or recharged manually, and which can manage short periods of ambient energy unavailability.

A device which harvests energy from wireless signals on given carrier and/or bandwidth and charges a simple circuitry that, once activated, it will emit, reflect or backscatter a signal which comprises at least an identification, ID, of the device may be denoted as a passive radio. The typical system architecture around a passive radio consists following components:
An activator: a device that sends an activation signal targeted at waking up the passive radio.

The passive radio: harvests energy over a range of frequencies and listens for activation signals. Once such a signal is detected, the passive radio emits/reflects/backscatters a signal which is specific to that radio ID. A passive radio can be realised, for example, with a tag.

A reader: a device that listens and detects the passive radio signals. The reader may or may not be the same device as the activator.

An IoT environment that utilises above elements may also be called a Backscatter-IoT or B-IoT.

As mentioned above, security is an essential feature in all wired and wireless communication systems. Two main functionalities related to security are authentication and confidentiality/privacy.

Authentication relates to confirming device identities and preventing tag cloning, i.e., preventing attackers that try to send data while claiming to be a different device. Confidentiality/privacy relates to ensuring protection of data against eavesdropping.

5G or NR is a very secure system and many algorithms and protocols have been introduced to guarantee not only authentication and confidentiality/privacy, but also other security functionalities like data integrity and availability. These protocols are implemented in different layers and locations, and rely on cryptography. However, this approach used by 5G/NR that relies on cryptography cannot be directly applied in IoT environment and especially in connection with B-IoT as passive and semi-passive tags have such low power availability that they lack the capability to even basic cryptographic algorithms.

Therefore, there is need to design novel solutions and protocols to address those security functionalities. Embodiments of the present solution propose a protocol for discovering and locating attackers of passive tags, i.e., unwanted transceivers that perform eavesdropping or cloning.

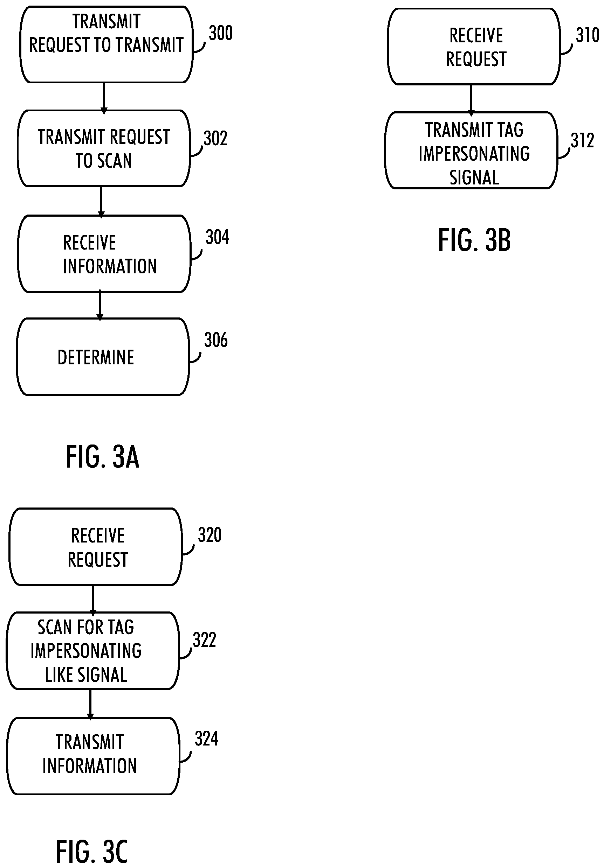

The flowchart of Fig. 3A illustrates an embodiment. The flowchart illustrates an example of an embodiment applied at an apparatus such as a network element. The apparatus may be a network element communicating with terminal devices and (e/g)NodeBs of a communication system, for example. The network element may be the location management function, LMF, of the network, one/more (e/g)NodeBs, a road side unit, RSU, or any NR/5G element that has been assigned the role of tag or reader activator.

In an embodiment, the network element apparatus may want to assess if a set of resources (associated with one/more tags reception) may be under attack. This may be triggered by the network based on poor performance results associated with the reading of one or more tags in those resources, or it may be triggered proactively, to assess the eavesdropping risks in a given spectrum.

In step 300, the apparatus is configured to transmit to one or more devices a request to transmit a tag-impersonating signal. In an embodiment, the tag-impersonating signal, TIS, is a signal that is similar or identical to that of a tag reply.

In step 302, the apparatus is configured to transmit to one or more devices or network nodes a request to scan for tag-impersonating signals and if found obtain information, at least, on spectrum where signals were found and report the information.

In scanning, the apparatus is requested to listen to the spectrum and attempt to detect a TIS pattern. The apparatus may be requested to determine whether tag-impersonating signals alone are occupying the spectrum, or whether there is something more than TIS in the spectrum, which is an indication of unwanted transceivers.

In step 304, the apparatus is configured to receive information from one or more devices or network nodes.

In step 306, the apparatus is configured to determine, based on the received information, information indicating whether there are unwanted transceivers or signals.

In an embodiment, 5G/NR signalling framework is utilised to discover and locate attackers that perform eavesdropping or cloning of passive tags. The devices such as terminal devices may be configured to act as decoy tags to stimulate an attacker to react (and ultimately impersonate the decoy tag), revealing thus itself to the network.

In an embodiment, the information indicating whether there are unwanted transceivers or signals comprise a probability that unwanted transceivers or signals exist.

A tag may be defined as representative of any passive device possibly comprised in another device.

The flowchart of Fig. 3B illustrates an embodiment. The flowchart illustrates an example of an embodiment applied at an apparatus, such as at a terminal device of a communication system, for example.

In step 310, the apparatus is configured to receive from a network a request to transmit a tag-impersonating signal.

In step 312, the apparatus is configured to transmit the tag-impersonating signal.

The flowchart of Fig. 3C illustrates an embodiment. The flowchart illustrates an example of an embodiment applied at an apparatus. The apparatus may be a terminal devices or an (e/g)NodeB of a communication system, for example.

In step 320, the apparatus is configured to receive from a network element a request to scan for tag-impersonating signals.

In step 322, the apparatus is configured to scan, based on the request, for tag-impersonating signals and if found, in step 324, the apparatus is configured to report information on spectrum where signals were found to the network element. As mentioned, in scanning, the apparatus may be configured to listen to the spectrum and attempt to detect a TIS pattern. The apparatus may be configured to determine whether tag-impersonating signals alone are occupying the spectrum, or whether there is something more than TIS in the spectrum, which is an indication of unwanted transceivers.

Thus, in an embodiment, the network element may request in step 300 other devices of the communication network to act as a decoy tag transmitting a tag-impersonating or a backscatter-like signal to tempt an attacker to reveal itself.

The apparatus may be configured to select a suitable strategy for detecting unwanted transceivers or eavesdroppers.

In a first strategy embodiment, the request to transmit a TIS comprises parameters of the tag-impersonating signal and time when to transm it.

For example, the request to transmit a tag-impersonating signal, TIS, may comprise preconfigured time, frequency and space resources for the transmission. In this case, for example, the terminal device requested to act as a decoy tag may generate a TIS as instructed by the network as follows
i. with a start time *t₀,*
ii. for a total duration *T*,
iii. on a carrier frequency *F*,
iv. with a comb *C*,
v. with a sequence *ID S*,
vi. with payload *P* containing some known measurement data.

Here comb is a pattern in frequency domain. For example comb with a value 2 means that the signal is sent every other subcarrier. Sequence ID refers to a root number used to generate the sequence.

In a second strategy embodiment, the request to transmit a TIS comprises a request to wait for an activation or activation-like signal, ALS, signal indicating when to start the transmission and the parameters of the tag-impersonating signal.

For example, in response to the network sending an activation-like signal ALS, where ALS is preconfigured by the network with a known time, frequency and code. In this case, for example, the terminal device requested to act as a decoy tag may listen for ALS and generate a BLS:
i. *Dₜ* seconds after the detection of ALS,
ii. on the same carrier as ALS,
iii. with a sequence *ID S*, as indicated by the network
iv. with payload *P* containing some known measurement data, as indicated by the network.

In an embodiment, the terminal device requested to act as a decoy tag may impersonate more than one tag, case in which the network may configure multiple TIS patterns according to either one of above alternatives, or a combination of above alternatives, that the UE should generate and transmit.

In an embodiment, the network element may request in step 302 other devices of the communication network to act as a reader or an enhanced reader, ER, which scans the radio environment and may transmit information of the scan to the network element.

The other devices may be terminal devices, (e/g) NodeBs or any other NR/5G device, for example.

In an embodiment, the network may request a device to: scan or listen for TIS and/or ALS in the a given spectra and upon detection of activity in the given spectra, perform eavesdropper detection (ED).

In an embodiment, the eavesdropper detection may be performed by applying the following sequence of operations:
i. detecting the TIS
ii. removing the TIS contribution from the total received signal.
iii. Assess the residual power in the spectrum and attempt to decode residual signal.
iv. Assess the outcome of the residual signal decoding.

In an embodiment, the device acting as ER, may report the outcome back to the network. For example, the outcome may be characterized by:
i. The residual signal total power (RSTP).
ii.The residual signal power per carrier/sub-band (SC-RSP).
iii. The payload of the decoded residual signal, e.g. the sequence ID that the eavesdropper has used and potentially other measurement data that the eavesdropper has modified.

In an embodiment, the network element receives the report sent by devices acting as ER. The network element may be configured to collect the reports and
i. Assess if the respective spectra are eavesdropped on. For example, the network element may conclude that an eavesdropper or unwanted transceiver is present in each spectrum if the average RSTP level (averaged over all ERs) is above a first threshold T1, or, as an alternative, the maximum RSTP level (among all ERs) is above a second threshold T2.
ii. Depend on the results from above i, the network element may refrain from using those resources.
iii. Compute a coarse position of the eavesdropper or unwanted transceiver for example by computing the center of mass of the ERs reporting an RSTP.

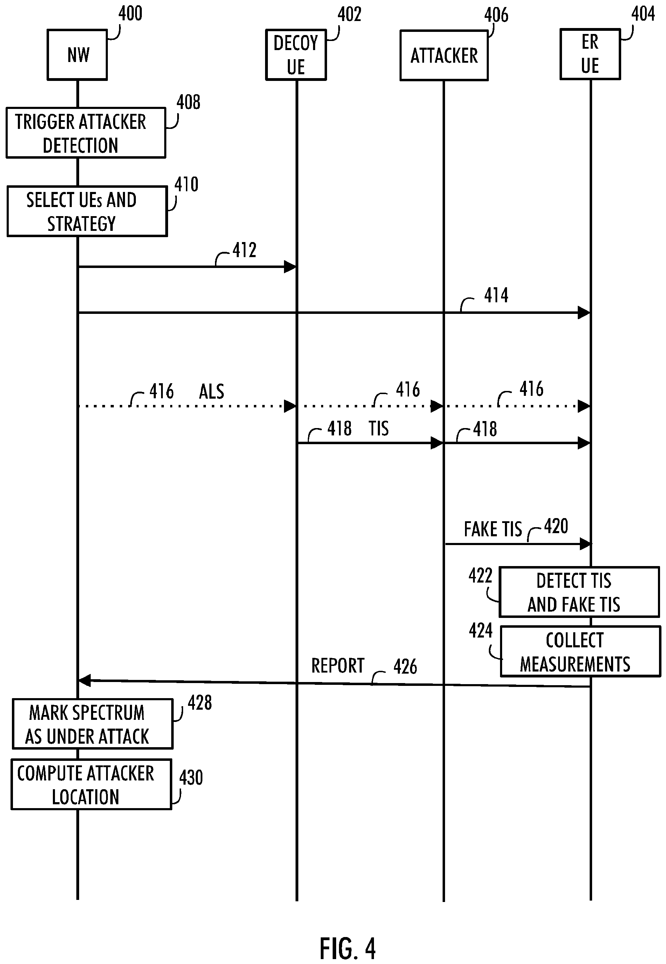

Fig. 4 is a signalling chart illustrating an embodiment where a network element 400 configures a first terminal device 402 act as a decoy tag and a second terminal device 404 to act as an enhanced reader ER. In this example there are only one decoy tag and ER for simplicity. In a practical situation there may be several of either one or each.

The purpose of the network element 400 is to reveal and also compute the location an unwanted transceiver 406, also denoted as attacker or eavesdropper.

The network element initiates the unwanted transceiver or eavesdropper detection in block 308. The procedure may be initiated reactively, after detecting systematic poor performance in tags of a given area or proactively, in anticipation of a tag attack.

In the beginning of the procedure, the network element 400 may be configured to select 410 a suitable strategy for exposing the attacker, for example either the first or second strategy described above. The network element 400 may also choose one or more terminal devices to act as decoy tags, one or more terminal devices and/or (e/g)NodeBs to act as ERs and triggers the terminal device acting as decoys to either send:
- An autonomous decoy TIS with a known waveform, on preconfigured physical resource blocks, PRBs, with a known *ID* and payload *P* (first strategy).
- A reactive decoy TIS as a response to detecting the ALS sent by the network (second strategy).

After the strategy and participating devices have been selected, the network element informs the devices about the selection and strategy. The network element is configured to transmit a message 412 to the terminal device 402 selected to act as the decoy and a message 414 to the device 404 selected to act as the ER. The messages comprise information on the TIS and possible ALS configurations. The messages may utilise various information elements, for example: LTE positioning protocol, LPP, Assistance Data (when the network element 400 is represented by the LMF and a terminal device impersonates a decoy tag or an ER), NR Positioning Protocol A, NRPPa, when the network element 400 is represented by the LMF and an (e/g)NodeB impersonates an ER, or Radio resource control, RRC, or Medium Access Control, MAC, control element, MAC CE, when the network element 400 is represented by an (e/g)NodeB.

The message 414 to the device 404 selected to act as the ER comprises also measurements which the ER should collect about the attacker 406, such as the fake TIS which the attacker is expected to send after hearing TIS from the terminal device 402 acting as the decoy.

In an embodiment, device 404 selected to act as the ER is informed where it should scan (the spectrum), or when it should start scanning - if there is a default spectrum, for example.

After the messages 412, 414 have been received by the devices 402, 404, the procedure continues. If the second strategy utilising ALS had been selected, the network element 400 transmits the ALS 416 to trigger the transmission of the TIS.

The terminal device 402 selected to act as the decoy transmits then the TIS 418, either based on the instructions in the message 412 or based on the ALS, depending on the selected strategy.

The attacker 406 detects the TIS signal 418 and may proceed to impersonate the decoy-tag device by sending a fake TIS 420. The fake TIS may use the same PRBs as the decoy TIS. However, typically the fake TIS will have a different received power at the ER side, when the attacker aims at faking the location of the tag or at drowning the tag signal. Further, typically the fake TIS will have a different payload, when the attacker intends to impersonate the tag.

Thus, the device 404 acting as the ER and scanning the given spectrum will receive 420 the fake TIS transmitted by the attacker 406 and additionally or optionally the TIS 418 transmitted by the terminal device 402 selected to act as the decoy.

In an embodiment, the device 404 acting as the ER is configured to 422 decode the contents of both the fake and the original TIS or decode the contents of the fake-TIS (in case the original TIS is drowned by the fake counterpart). In any case, since device 404 acting as the ER knows the exact content of the original TIS, it is able to detect the attacker in either of the above options).

Then the device 404 acting as the ER is configured to collect 424 attacker measurements, i.e., remove the contribution of the original TIS so that the "attack signal" remains perform measurements and report 426 the attacker measurements as instructed by the network element 400. Thus, residual signal total power, RSTP, sub-band/carrier residual signal power, SC-RSP, and fake payload may be reported, for example. The report may be sent as a new information element over LPP measurement report, or as an uplink small data transmission, UL SDT, or Physical Uplink Shared Channel, PUSCH, message, or over NRPPa (when a (e/gNodeB is acting as an ER).

The network element 400, using the content of all messages from all devices acting as ERs, determines concludes 428 which resources of used spectrum are under attack and optionally or additionally computes 430 the attacker's approximate location. This may be calculated as the centre of mass of all ERs, for example.

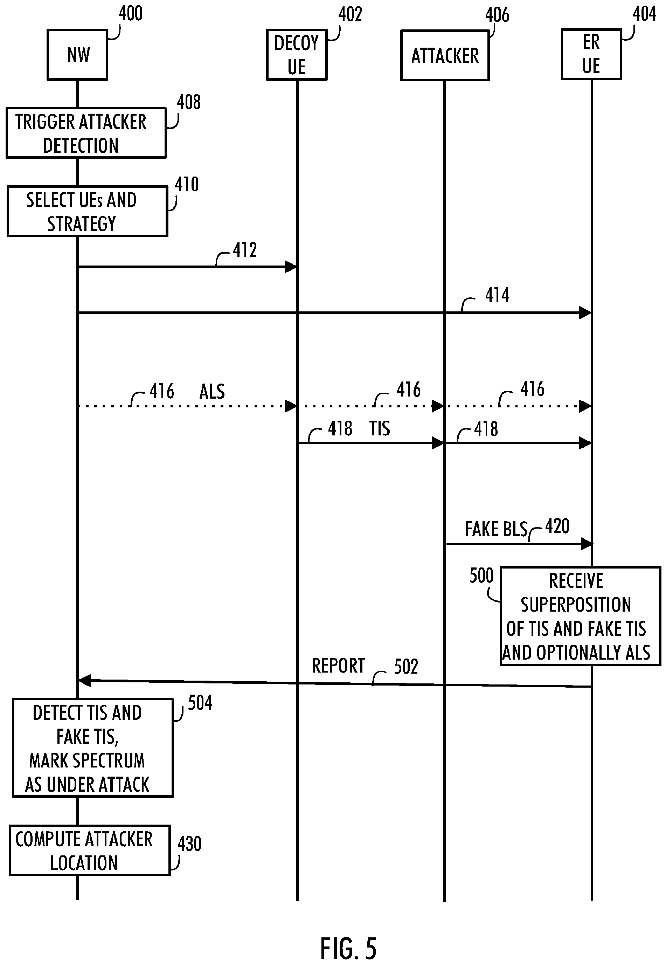

Fig. 5 is a signalling chart illustrating an embodiment where a network element 400 configures a first terminal device 402 act as a decoy tag and a second terminal device or (e/g)NodeB 404 to act as an enhanced reader ER. In this example there are only one decoy tag and ER for simplicity. In a practical situation there may be several of either one or each.

The blocks and signals up to 420 are the same as in the example of Fig. 4, so they are not repeated here.

In block 500, the device 404 acting as the enhanced reader ER receives the superposition of TIS 418 and fake- TIS 420 and optionally ALS 416 is the second strategy is used.

Then in the device 404 acting as the ER forwards or relays with message 502 the received signals to the network element 400.

After receiving the message 502, the network element 400 is configured to, in block 504, decode the contents of the fake- TIS and optionally the original TIS and determine which resources of used spectrum are under attack.

In an embodiment, the network element 400 computes the attacker's approximate location, for example as the centre of mass of all ERs.

When more than one device 404 acting as the ER are used, the example of Fig. 5 has advantage over the example of Fig. 4 that the network element 400 centrally collects more data and performs centralized ED, thus potentially achieving better performance. The disadvantage is that more data needs to be shared from the ER to the network element. Therefore, the implementation of the example of Fig. 5 may better fit the scenario where (e/g)NodeBs act as ERs instead of terminal devices.

Figs. 9A and 9B illustrate embodiments. The figures illustrate simplified examples of apparatuses applying embodiments of the invention. It should be understood that the apparatuses are depicted herein as examples illustrating some embodiments. It is apparent to a person skilled in the art that the apparatuses may also comprise other functions and/or structures and not all described functions and structures are required. Although the apparatuses have been depicted as one entity, different modules and memory may be implemented in one or more physical or logical entities.

Fig. 9A illustrates an example of an apparatus which may be a network element 400. The apparatus may be the location management function, LMF, of the network, an (e/g)NodeB, a road side unit, RSU, or any NR/5G element that has been assigned the role of tag or reader activator. In an embodiment, the apparatus may also be the device acting as the ER, when the ER is a (e/g)NodeBs.

The apparatus 400 of the example includes a control circuitry 600 configured to control at least part of the operation of the apparatus.

The apparatus may comprise a memory 602 for storing data. Furthermore, the memory may store software 604 executable by the control circuitry 900. The memory may be integrated in the control circuitry.

The apparatus may comprise one or more interface circuitries 606. The interface circuitries are operationally connected to the control circuitry 900. An interface circuitry may be a set of transceivers configured to communicate wirelessly with terminal devices or user equipment of a wireless communication network. The interface circuitry may be connected to an antenna arrangement (not shown). The apparatus may also comprise a connection to a transmitter instead of a transceiver. The apparatus may further comprise an interface configured to communicate with other network elements such a base station, core network or other corresponding apparatuses.

In an embodiment, the software 604 may comprise a computer program comprising program code means adapted to cause the control circuitry 600 of the apparatus to realise at least some of the embodiments described above.

Fig. 9B illustrates an example of an apparatus which may be terminal device 402 or a part of a terminal device. The apparatus may be a device 402 selected to act as the decoy.

The apparatus 402 of the example includes a control circuitry 610 configured to control at least part of the operation of the apparatus.

The apparatus may comprise a memory 612 for storing data. Furthermore, the memory may store software 614 executable by the control circuitry 610. The memory may be integrated in the control circuitry.

The apparatus may comprise one or more interface circuitries 616. The interface circuitries are operationally connected to the control circuitry 610. An interface circuitry 616 may be a transceiver configured to communicate with communication network via an (e/g)NodeB of the communication network, for example. The interface circuitry may be connected to an antenna arrangement (not shown). The apparatus may also comprise a connection to a transmitter instead of a transceiver. The apparatus may further comprise user interface 618.

In an embodiment, the software 614 may comprise a computer program comprising program code means adapted to cause the control circuitry 610 of the apparatus to realise at least some of the embodiments described above.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. An apparatus in a communication system, comprising:
means for transmitting to one or more devices a request to transmit a tag-impersonating signal;
means for transmitting to one or more devices or network nodes a request to scan for tag-impersonating signals and if found obtain information, at least, on spectrum where signals were found and report the information;
means for receiving information from one or more devices or network nodes; and
means for determining, based on the received information, information indicating whether there are unwanted transceivers or signals.

2. The apparatus of claim 1, wherein
the request to the tag-impersonating signal comprises a request to wait for an activation signal indicating when to start the transmission and the parameters of the tag-impersonating signal.

3. The apparatus of claim 1 or 2, further comprising:
means for determining, based on the received information, the location information of unwanted transceivers on the given area.

4. An apparatus in a communication system, comprising:
means for receiving from a network a request to transmit a tag-impersonating signal;
means for transmitting the tag-impersonating signal based on parameters and transmission time included in the request.

5. The apparatus of claim 4, further comprising:
means for waiting for an activation signal from the network element;
means for transmitting the tag-impersonating signal after receiving the activation signal based on parameters included in the activation signal.

6. An apparatus in a communication system, comprising:
means for receiving from a network element a request to scan for tag-impersonating signals;
means for scanning, based on the request, for tag-impersonating signals, and if found,
means for reporting information on spectrum where signals were found to the network element.

7. The apparatus of claim 6, further comprising:
means for detecting a tag-impersonating signal;
means for removing the contribution of the tag-impersonating signal from spectrum where the signal was found to obtain a residual signal;
means for measuring and/or decoding the residual signal to obtain information of a signal from unwanted transceivers;
means for transmitting the obtained information to the network element.

8. The apparatus of claim 7, wherein the obtained information comprises one or more of the following:
residual signal total power;
residual signal power per carrier/subband;
payload of the residual signal.

9. The apparatus of any claims 6-8, further comprising:
means for relaying the found tag-impersonating signals to the network element.

10. A method for an apparatus in a communication system comprising:
transmitting to one or more devices a request to transmit a tag-impersonating signal;
transmitting to one or more terminal devices or network nodes a request to can for tag-impersonating signals and if found obtain information, at least, on spectrum where signals were found and report the information;
receiving information from one or more terminal devices or network nodes; and
determining, based on the received information, information indicating whether there are unwanted transceivers or signals.

11. The method of claim 10, wherein the request to transmit the tag-impersonating signal comprises a request to wait for an activation signal indicating when to start the transmission and the parameters of the tag-impersonating signal.

12. The method of claim 10 or 11, further comprising:
determining, based on the received information, the location information of unwanted transceivers on the given area.

13. A method for an apparatus in a communication system comprising
receiving from a network a request to transmit a tag-impersonating signal;
transmitting the tag-impersonating signal based on parameters and transmission time included in the request.

14. The method of claim 13, further comprising waiting for an activation signal from the network element; transmitting the tag-impersonating signal after receiving the activation signal based on parameters included in the activation signal.

15. A method for an apparatus in a communication system comprising:
receiving from a network element a request to scan for tag-impersonating signals;
scanning, based on the request, for tag-impersonating signals, and if found,
reporting information, at least, on spectrum where signals were found the network element.
